# EUROPEAN PATENT SPECIFICATION

(11) **EP 4 462 329 B1**
(45) Date of publication and mention of the grant of the patent: **04.02.2026**
(21) Application number: 24174322.8
(22) Date of filing: 06.05.2024
(51) Int. Cl.: G06Q 10/067

(54) **CROWDSOURCING ENGINEERING DESIGNS FOR INDUSTRIAL CONTROL PRODUCTS**
CROWDSOURCING VON TECHNISCHEN ENTWÜRFEN FÜR INDUSTRIELLE STEUERUNGSPRODUKTE
CONCEPTIONS D'INGÉNIERIE D'EXTERNALISATION OUVERTE POUR PRODUITS DE COMMANDE INDUSTRIELS

(30) Priority: 09.05.2023 US 202318195216
(43) Date of publication of application: 13.11.2024
(73) Proprietor: Rockwell Automation Technologies, Inc., Mayfield Heights, OH 44124 (US)
(72) Inventor: Mason, John P., Mayfield Heights, OH 44124 (US); Renderman, Gerald W., Mayfield Heights, OH 44124 (US); Haas, Mark R., Mayfield Heights, OH 44124 (US); Mestre, Heitor A., Mayfield Heights, OH 44124 (US); Hill, Matthew S., Mayfield Heights, OH 44124 (US); Imbert, Nataliya, Mayfield Heights, OH 44124 (US); Snelgrove, Ryan L., Mayfield Heights, OH 44124 (US); Cruz, Zachary S., Mayfield Heights, OH 44124 (US); Esson, Jack C., Mayfield Heights, OH 44124 (US); Wandsnider, Richard E., Mayfield Heights, OH 44124 (US); Auh, Yong Y., Mayfield Heights, OH 44124 (US)
(74) Representative: Grünecker Patent- und Rechtsanwälte PartG mbB

(56) References cited:
- US-A1- 2022 222 623

## Description

### BACKGROUND INFORMATION

Industrial control products such as motor control centers, variable frequency drives, and others often require various design modifications for different applications. These design modifications can require significant engineering efforts to generate appropriate engineering design files that are ultimately used to manufacture the modified industrial control products. Systems, methods, and media that can provide improved efficiency in the engineering workflow for industrial control product design and manufacturing are generally desired.
US 2022 222623 A1 relates to a system and method of industrial automation multi-developer control code change commits. A method is provided for rendering a first integrated development environment (IDE) interface on a first client device; receiving an edit record defining modifications made on the first client device to a first version of system project data that is stored locally on the first client device, wherein the system project data is configured to facilitate monitoring and control of an industrial automation system; storing the edit record in association with a cloud-based version of the system project data stored on the cloud platform, identifying a user having authorization to edit the system project data, and sending a notification of the edit record to a second IDE interface rendered on a second client device associated with the user; and in response to receiving a request from the second client device to incorporate modifications defined by the edit record, updating a second version of the system project data that is stored locally on the second client device to synchronize the modifications to the second version of the system project data.

### BRIEF DESCRIPTION

It is the object of the present invention to improve automated re-use and reduce manual engineering efforts to generate engineering designs for different variations of industrial control products.
This object is solved by the subject matter of the independent claims.
Preferred embodiments are defined by the dependent claims.

One aspect of the present disclosure is a method for crowdsourcing engineering designs. The method includes receiving a first order for a first industrial control product, the first industrial control product associated with a base design and including a first option pack that is a first variation to the base design; determining that the first option pack is new responsive to determining that engineering design files for the first option pack do not exist in an industrial design library; receiving engineering design files for the first option pack that were created manually based on the first variation to the base design; and storing the engineering design files for the first option pack that were created manually based on the first variation to the base design in the industrial design library. The method also includes receiving a second order for a second industrial control product, the second industrial control product associated with the base design and including a second option pack that is a second variation to the base design; determining that the second option pack is new responsive to determining that engineering design files for the second option pack do not exist in the industrial design library; receiving engineering design files for the second option pack that were created manually based on the second variation to the base design; and storing the engineering design files for the second option pack that were created manually based on the second variation to the base design in the industrial design library. The method further includes receiving a third order for a third industrial control product, the third industrial control product associated with the base design and including the first option pack and the second option pack; automatically generating engineering design files for the third industrial control product using the engineering design files for the first option pack that were created manually on the first variation to the base design and the engineering design files for the second option pack that were created manually based on the second variation to the base design stored in the industrial design library; and providing the engineering design files for the third industrial control product to a manufacturing system such that the engineering design files for the third industrial control product can be used to manufacture the third industrial control product.

Another aspect of the present disclosure is a non-transitory computer-readable storage medium having instructions stored thereon that, when executed by at least one processor, cause the at least one processor to implement operations. The operations include receiving a first order for a first industrial control product, the first industrial control product associated with a base design and including a first option pack that is a first variation to the base design; determining that the first option pack is new responsive to determining that engineering design files for the first option pack do not exist in an industrial design library; receiving engineering design files for the first option pack that were created manually based on the first variation to the base design; and storing the engineering design files for the first option pack that were created manually based on the first variation to the base design in the industrial design library. The operations also include receiving a second order for a second industrial control product, the second industrial control product associated with the base design and including a second option pack that is a second variation to the base design; determining that the second option pack is new responsive to determining that engineering design files for the second option pack do not exist in the industrial design library; receiving engineering design files for the second option pack that were created manually based on the second variation to the base design; and storing the engineering design files for the second option pack that were created manually based on the second variation to the base design in the industrial design library. The operations further include receiving a third order for a third industrial control product, the third industrial control product associated with the base design and including the first option pack and the second option pack; automatically generating engineering design files for the third industrial control product using the engineering design files for the first option pack that were created manually based on the first variation to the base design and the engineering design files for the second option pack that were created manually based on the second variation to the base design stored in the industrial design library; and providing the engineering design files for the third industrial control product to a manufacturing system such that the engineering design files for the third industrial control product can be used to manufacture the third industrial control product.

Yet another aspect of the present disclosure is a system that can be used for crowdsourcing engineering designs. The system includes one or more processors and one or more non-transitory computer readable storage media having instructions stored thereon that, when executed by the one or more processors, cause the one or more processors to implement operations. The operations include receiving a first order for a first industrial control product, the first industrial control product associated with a base design and including an option pack that is a variation to the base design; determining that the option pack is new responsive to determining that engineering design files for the option pack do not exist in an industrial design library; receiving engineering design files for the option pack that were created manually based on the variation to the base design; and storing the engineering design files for the option pack that were created manually based on the variation to the base design in the industrial design library. The operations further include receiving a second order for a second industrial control product, the second industrial control product associated with the base design and including the option pack that is the variation to the base design; automatically generating engineering design files for the second industrial control product using the engineering design files for the option pack that were created manually based on the variation to the base design stored in the industrial design library; and providing the engineering design files for the third industrial control product to a manufacturing system such that the engineering design files for the second industrial control product can be used to manufacture the second industrial control product.

### BRIEF DESCRIPTION OF THE DRAWINGS

FIG. 1 is a block diagram showing an example system for crowdsourcing engineering designs for industrial control products, in accordance with some aspects of the disclosure.
FIG. 2 is a block diagram showing an example base design for an industrial control product, in accordance with some aspects of the disclosure.
FIG. 3 is a block diagram showing a first example option pack that can be ordered as a first variation to the base design of FIG. 2, in accordance with some aspects of the disclosure.
FIG. 4 is a block diagram showing a second example option pack that can be ordered as a second variation to the base design of FIG. 2, in accordance with some aspects of the disclosure.
FIG. 5 is a flowchart showing an example process for crowdsourcing engineering designs for industrial control products, in accordance with some aspects of the disclosure.
FIG. 6 is a flowchart showing another example process for crowdsourcing engineering designs for industrial control products, in accordance with some aspects of the disclosure.

### DETAILED DESCRIPTION

The crowdsourcing of engineering designs using the systems, methods, and media described herein can allow the broader engineering community to contribute new option packages to base designs of industrial control products to provide a more extensive capability for automated re-use. The crowdsourcing functionality enables the creation of millions of variations of a single base design based on a wide variety of different configuration options for the base design. Accordingly, the crowdsourcing functionality can be used to avoid the significant time and subject matter expertise required to program all of the different possible variations up front. Some existing approaches have no means for prioritization and require programming of all variations even though only a small percentage of the variations may ultimately be ordered by a customer. Accordingly, the crowdsourcing functionality discussed herein can provide technical improvements in the field of industrial control by significantly reducing the manual engineering efforts required to generate engineering designs for different variations of industrial control products. As a result of this improved efficiency in the engineering workflow, orders for industrial control products for a variety of different applications can be manufactured and delivered more efficiently.

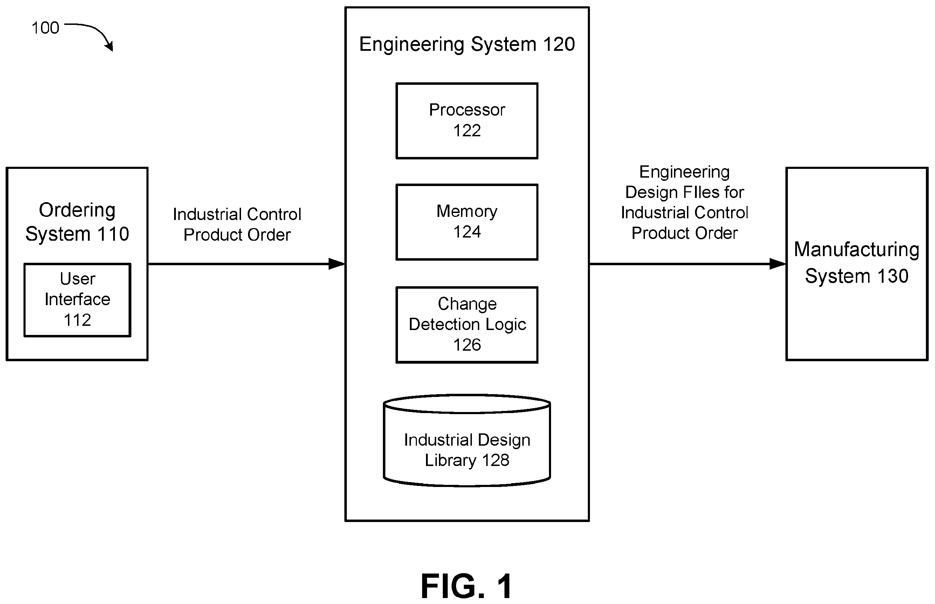

Referring to FIG. 1, a block diagram of an example system 100 for crowdsourcing engineering designs for industrial control products is shown, in accordance with some aspects of the disclosure. System 100 is shown to include three different example sub-systems that can be implemented in various ways, including an ordering system 110, and engineering system 120, and a manufacturing system 130. It will be appreciated that order system 110, engineering system 120, and manufacturing system 130 can be managed by the same entity or by separate entities depending on the application. For example, ordering system 110, engineering system 120, and manufacturing system 130 can each be implemented via one or more data centers (e.g., cloud-based server computers). Generally, system 100 can be used to process and fulfill orders for industrial control products more efficiently through automated re-use of engineering designs for different variations of industrial control products that may be ordered by customers.

Ordering system 110 can be implemented in a variety of ways, but generally ordering system 110 can include hardware and software for receiving and processing orders for industrial control products. Ordering system 110 can generate and cause a user interface 112 to be presented to a user via a user device that facilitates the ordering process for industrial control products. For example, ordering system 110 can cause user interface 112 to be presented to a user via a web browser, a mobile application, a desktop application, etc. that allows the user to enter various configuration parameters about a specific industrial application. The user may be an engineer, a manager, a stakeholder, or other personnel associated with an industrial application, such as various types of manufacturing plants, distribution facilities, and the like. The user device can be various types of electronic devices, such as a smartphone, a laptop computer, a desktop computer, a workstation, etc.

The industrial control product ordered by the user via ordering system 110 can be any of a variety of different types of industrial control products. For example, the industrial control product can be a motor control center (MCC), a variable frequency drive (VFD), a human machine interface (HMI) system, or various other types of industrial control products known to those skilled in the art. Depending on the specific application for the user, a variety of different types and combinations of different components in different configurations may be required in order to fulfill the order for the industrial control product. Via user interface 112, the user can provide various different parameters associated with the specific application for the user, including various configuration parameters such as project details (e.g., location, industry, etc.), system attributes (e.g., line voltage, control voltage, load information), drive attributes, and other types of configuration parameters.

Based on the parameters entered by the user via user interface 112, ordering system 110 can generate a recommended industrial control product or recommended industrial control products that fit the user's needs as defined by the configuration parameters entered by the user. The user can then provide input via user interface 112 to place an order for the recommended industrial control product or recommended industrial control products via ordering system 110. Once an order has been placed, ordering system 110 can provide the order as well as various data associated with the order to engineering system 120.

Engineering system 120 can likewise be implemented in a variety of ways, but generally engineering system 120 can include hardware and software for processing orders for industrial control products received from ordering system 110 and generating appropriate engineering design files for fulfilling the orders for industrial control products received from ordering system 110. The engineering design files can be a variety of different types of engineering design files that may be needed to manufacture and/or install industrial control products, as will be appreciated by the skilled person. For example, the engineering design files can include various types of computer-aided design (CAD) files including electrical wiring design schematics, three-dimensional mechanical modeling files (e.g., spatial modeling, thermal modeling, etc.), and other types of computer-aided design files. The engineering design files can also include various different types of control logic files including programmable logic controller (PLC) logic files, computer numerical control (CNC) files, and other similar types of files. The engineering design files can include networking design files and any other type of design files that may be used to fulfill orders for industrial control products.

Engineering system 120 can be configured to generate and cause a variety of different types of user interfaces to be presented to engineering personnel to facilitate the fulfillment of orders for industrial control products. Significant amounts of engineering effort are typically required to fulfill orders for industrial control products, especially when the orders for the industrial control products include variations to the more standard base designs of industrial control products offered by a given manufacturer. Via engineering system 120, a variety of different types of engineers and other personnel (e.g., mechanical engineers, electrical engineers, networking engineers, and/or other skilled professionals that may or may not be engineers) can manually modify and/or create new engineering design files to fulfill different variations of industrial control products for different applications. The engineers and other skilled personnel can use a variety of different types of software applications and programs known to the skilled person to generate these engineering design files. As discussed in more detail below, engineering system 120 can leverage engineering design files that are manually created by engineers and other skilled personnel for automated re-use.

Engineering system 120 is shown to include a processor 122, memory 124, change detection logic 126, and an industrial design library 128. Processor 122 can be implemented using any suitable hardware processor or combination of processors, including using one or more central processing units (CPUs), graphics processing units (GPUs), and other types and combinations of hardware processing components known to the skilled person. Processor 122 can further be implemented using a suitable number of processing cores, including single core processors, dual core processors, and other processor core configurations. Processor 122 can generally execute a variety of different machine-readable instructions (e.g., change detection logic) to facilitate performance of the various functions of engineering system 120 described herein.

Memory 124 can include any suitable storage medium that can be used to store machine-readable instructions executable by processor 122 to perform various operations of engineering system 120 as described herein. For example, memory 124 can include any suitable volatile memory devices, non-volatile memory devices, or any suitable combination thereof. Memory 124 can include random-access memory (RAM), read-only memory (ROM), electrically erasable programmable read-only memory (EEPROM), one or more flash drives, one or more hard disks, one or more solid state drives, one or more optical drives, etc. Memory 124 can include one or more non-transitory computer readable storage media having instructions stored thereon for execution by processor 122 to implement various operations of engineering system 120. Processor 122 can execute different instruction sets stored in memory 124 to transmit information and/or content (e.g., results of a database query, a portion of a user interface, textual information, graphics, etc.) to different computing devices and systems, receive information and/or content from different computing devices and systems, receive instructions from different computing devices and systems, and other types of operations.

Change detection logic 126 can include instructions for analyzing engineering design files for industrial control products to detect changes that have been made to the engineering design files for industrial control products. For example, if engineering system 120 receives an order for an industrial control product including a new option pack for which engineering design files do not exist in industrial design library 128 (as detailed further below), an engineer may need to manually create engineering design files for the new option pack (e.g., new electrical schematics, new mechanical models, etc.) in order to fulfill the order for the industrial control product including the new option pack. The engineering design files that are manually created by the engineer for the new option pack can be provided as input to change detection logic 126, and change detection logic can automatically identify one or more changes made to the engineering design files relative to base engineering design files. The changes can include addition of new components, moving of components, deletion of components, and other types of changes that can be implemented in the engineering design for a given industrial control product. Change detection logic 126 can be implemented in a variety of ways, including using rules, conditional statements, loops, learning models, and other types of logic for identifying changes made to engineering design files. In some examples, change detection logic 126 can be provided as a plug-in software component that adds a change detection feature to an existing computer program, such as a computer-aided design program. Change detection logic 126 can also be executed by one or more server computers, such as one or more server computers in a data center.

Industrial design library 128 can be implemented in a variety of ways, but generally stores various different types of engineering design files for industrial control products that can be automatically re-used. Industrial design library 128 can be a component of memory 124 in some examples. Industrial design library 128 can be implemented using one or more databases, including various different types of databases and combinations of databases such as relational databases (e.g., Structured Query Language (SQL) databases, etc.), centralized databases, distributes databases, cloud databases, etc. As noted, if engineering system 120 receives an order for an industrial control product including a new option pack for which engineering design files do not exist in industrial design library 128, an engineer may need to manually create engineering design files for the new option pack (e.g., new electrical schematics, new mechanical models, etc.) in order to fulfill the order for the industrial control product including the new option pack. The engineering design files that are manually created by the engineer for the new option pack can then be stored in industrial design library 128 such that the engineering design files that are manually created by the engineer for the new option pack can be automatically re-used in the event another order for the new option pack is received. Accordingly, within the context of the present disclosure, "crowdsourcing" allows engineers to contribute engineering design files corresponding to base designs and/or option packs to industrial design library 128 such that, if another order for the option pack is received, the engineering design files in industrial design library 128 can be automatically leveraged to fulfill the order more efficiently. Industrial design library 128 can also be leveraged to make new designs available for quoting and for order engineering.

Industrial design library 128 can store a variety of different types of engineering design files, including different types of computer-aided design files such as electrical wiring design schematics, three-dimensional mechanical modeling files (e.g., spatial modeling, thermal modeling, etc.), and other types of computer-aided design files. Industrial design library 128 can also store various different types of control logic files including programmable logic controller files, computer numerical control files, bill of materials (BOM), and other similar types of files. Industrial design library 128 can also store networking design files and any other type of engineering design files and associated data. Industrial design library 128 can include various auto-generation pathways defined by base designs for different industrial control products (e.g., a base design for a motor control center) and one or more option packages associated with the base designs. For example, when an engineer manually creates new engineering design files for a new option pack associated with a base design, engineering system 120 can create a new auto-generation pathway in industrial design library that includes the new engineering design files. Industrial design library 128 can store changes made to base designs as detected using change detection logic 126 such that the changes can be automatically applied to base designs as appropriate in the future.

Manufacturing system 130 can be implemented in a variety of ways, but generally includes hardware, software, mechanical components, networking components, etc. for manufacturing industrial control products based on engineering design files received from engineering system 120. Manufacturing system 130 can be associated with the same entity as engineering system 120 and/or ordering system 110 or can be associated with a different entity from engineering system 120 and/or ordering system 110. For example, manufacturing system 130 can receive engineering design files for a custom motor control center from engineering system 120 and use the engineering design files for the custom motor control center to manufacture the custom motor control center. The engineering design files can include a bill of materials for the custom motor control center. After manufacturing, the custom motor control center can then be delivered to the customer that placed the order for the custom motor control center using ordering system 110. As another example, manufacturing system 130 can receive engineering design files for a custom variable frequency drive from engineering system 120 and use the engineering design files for the custom variable frequency drive to manufacture the custom variable frequency drive. The engineering design files can include a bill of materials for the custom variable frequency drive. After manufacturing, the custom variable frequency drive can then be delivered to the customer that placed the order for the custom variable frequency drive using ordering system 110.

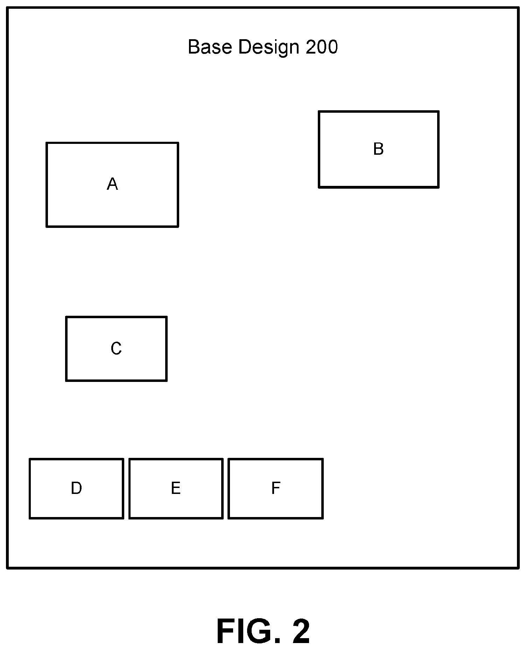

Referring to FIG. 2, a block diagram of an example base design 200 for an industrial control product is shown, in accordance with some aspects of the disclosure. Base design 200 can be associated with a variety of different types of industrial control products. For example, base design 200 can be associated with a common design for a specific model of a motor control center manufactured and sold by a company. As another example, base design 200 can be associated with a common design for a specific model of a variable frequency drive manufactured and sold by a company. Base design 200 provides a common template for orders of a given industrial control product, however, as will be appreciated by the skilled person, industrial control product customers often desire one or more modifications to the common template to better fit their specific application. For example, manufacturing plants in different countries may use different voltage levels for different purposes, manufacturing plants may have different safety regulations and requirements, different manufacturing plants may certain preferences for locations of components due to training standards, and other types of modifications that may be implemented in industrial control product designs.

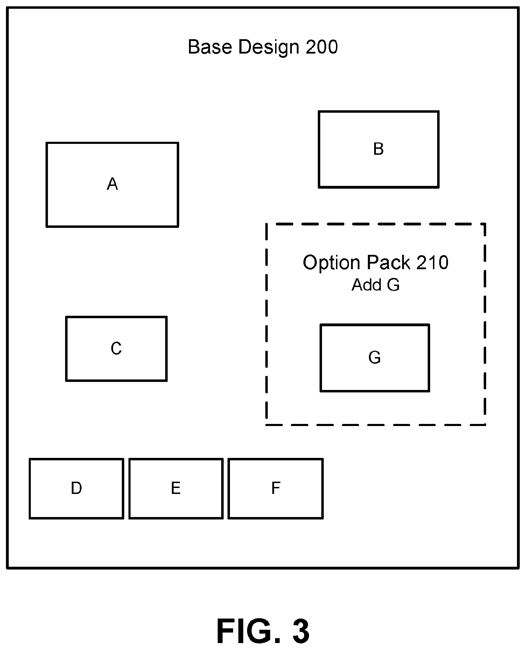

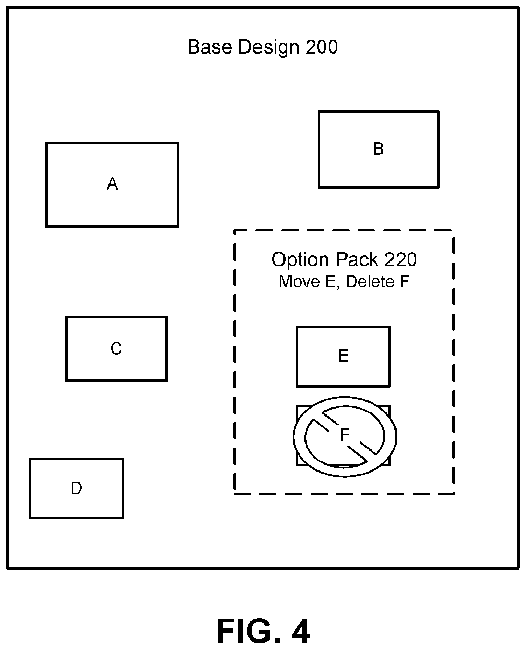

Base design 200 as shown in FIG. 2 specifically includes six different components: A, B, C, D, E, and F. These components each are shown at different locations within base design 200 and are shown to have different sizes. The illustration provided in FIG. 2 (and the illustrations provided in FIG. 3 and FIG. 4) are intended to simplify the presentation of what a base design for an industrial control product looks like (and what option packs for industrial control products look like). It will be appreciated that the illustrated components A-F can represent different components depending on the type of industrial control product that base design 200 is associated with. It will also be appreciated that certain base designs may include significantly more components, and arrangements and connections between components, than illustrated in the example of FIG. 2 (and of FIG. 3 and FIG. 4). The components A-F can represent electrical components, mechanical components, network components, and/or other types of components that can be associated with a base design for an industrial control product. The components A-F can also represent design parameters (e.g., line voltage, control voltage, sheet metal thickness, etc.) such that components A-F are not necessarily physical components.

As a specific example, as noted base design 200 can be a base design for a specific type of motor control center. In such an example, component A can be a first type of motor drive for a first motor controlled by the motor control center, component B can be a second type of motor drive for a second motor controlled by the motor control center, component C can be a communications bus, component D can be a push button, component E can be a selector switch, and component F can be a contactor. Additional components and parameters such as shutters, interlocks, support pans, starters, vents, closing plates, arc baffles, pressure relief systems, latches, insulating structures, networking standards, communication protocols, relays, input-output cards, voltage levels, current levels, programmable logic controllers, other types of controllers, memory devices, impedance levels, safety components, and/or other types of components and parameters can also be defined by base design 200. In general, base design 200 provides a common template for the specific type of motor control center offered for sale by a given manufacturer.

Referring to FIG. 3, a block diagram of a first example option pack 210 that can be ordered as a first variation to base design 200 is shown, in accordance with some aspects of the disclosure. As shown in FIG. 3, option pack 210 includes an addition of a seventh component, G, to base design 200. Since component G is not included in base design 200, the addition of component G represents a variation to base design 200. Component G can be any of a variety of different types of components and/or parameters that serve as a variation to base design 200. For example, continuing with the example of the motor control center, component G can be a third type of motor drive for a third motor controlled by the motor control center, or a solid-state overload relay added to the motor control center. Component G can also be a different parameter such as a different line voltage that needs to be used by the motor control center (e.g., for a motor control center in a different country). Component G can also be a safety device, such as a safety shutdown switch that is needed to comply with a certain standard for a given customer. The addition of component G to base design 200 via option pack 210 may need to be engineered in the sense that an engineer may need to manually modify the engineering design files associated with base design 200 to account for the addition of component G before an industrial control product including component G can be properly manufactured.

Referring to FIG. 4, a block diagram showing a second example option pack 220 that can be ordered as a second variation to base design 200 is shown, in accordance with some aspects of the disclosure. As shown in FIG. 4, option pack 220 includes a relocation of component E within base design 200 and a deletion of component F from base design 200. That is, option pack 220 includes multiple variations to base design 200. Continuing with the example of the motor control center as discussed above, the movement of component E can include moving the selector switch to a different location (e.g., a different panel) of the motor control center than defined by base design 200. Also, the deletion of component F can include deleting a contactor from base design 200. The relocation of component E and the deletion of component F via option pack 220 may need to be engineered in the sense that an engineer may need to manually modify the engineering design files associated with base design 200 to account for the relocation of component E and the deletion of component F before an industrial control product including the relocation of component E and the deletion of component F can be properly manufactured.

It will be appreciated to those skilled in the art that different industrial control product definitions can yield millions of different combinations of options or attributes. For example, looking at base design 200 as illustrated in FIG. 2, suppose there are six different options for implementing each of the six components A-F. In this scenario, there are approximately 50,000 different combinations of the six components A-F that are possible. Now, consider a base design with eight different options for implementing each of ten different components, and one is looking at approximately 100,000,000 different combinations of the ten components that are possible. For each different valid combination, a subject matter expert (SME) may be required to spend a significant amount of time engineering the combination by modifying engineering design files. The use of industrial design library 128 and difference detection logic 126 can facilitate significant improvements in terms of efficiency by automatically re-using engineering designs for products variations, thereby allowing for faster release of industrial control products.

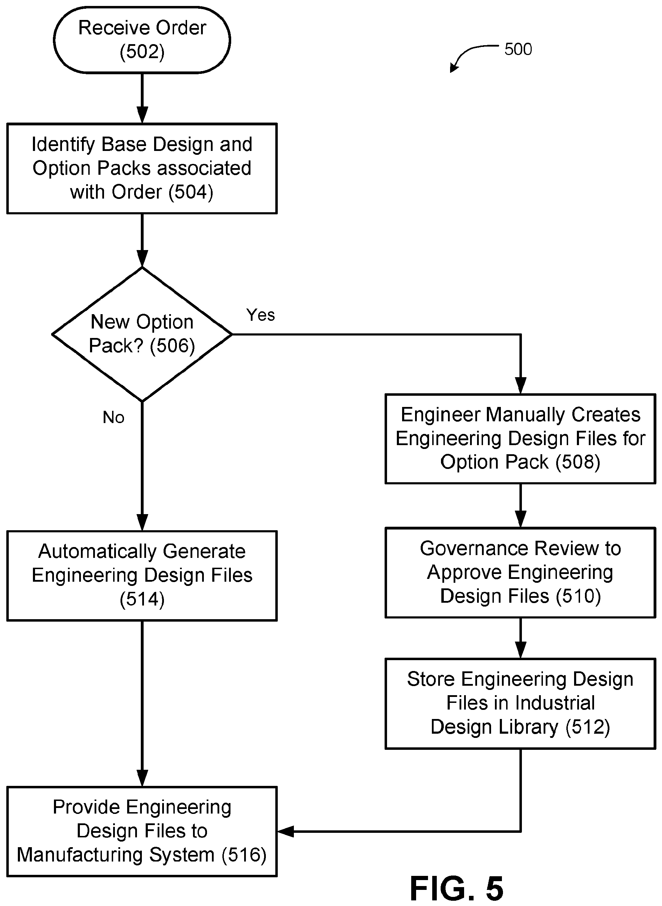

Referring to FIG. 5, a flowchart showing an example process 500 for crowdsourcing engineering designs for industrial control products is shown, in accordance with some aspects of the disclosure. Process 500 can be performed by engineering system 120 as discussed above, for example. Process 500 can be used to build up engineering design files contained in industrial design library 128 such that industrial design library 128 can be leveraged to automatically generate engineering design files for different option packs associated with a base design for an industrial control product. As a result, process 500 can allow businesses to crowdsource the overall completeness of industrial design library 128 instead of manually engineering a wide variety of possible variations up front prior to sales.

At 502, process 500 can receive an order for an industrial control product. For example, a user of ordering system 110 may enter various parameters associated with an industrial application (e.g., location, industry, equipment details, networking, line voltage, control voltage, load information, motor operating parameters, drive attributes, operating conditions, etc.) via user interface 112 presented by ordering system 110. Then, based on the configuration parameters entered by the user, ordering system 110 can generate a recommended industrial control product that meets the needs of the user. The user may then be able to view various details about the recommended industrial control product via user interface 112 and ultimately submit an order for the recommended industrial control product. Then, the order submitted for the recommended industrial control product can be received by engineering system 120. The industrial control product can be any of a variety of different types of industrial control products, such as a motor control center or a variable frequency drive.

At 504, process 500 can identify a base design and any option packs associated with the order. For example, engineering system 120 (e.g., via processor 122 executing instructions stored in memory 124) can process the order received at 502 to identify the closest base design associated with the order and determine whether the order includes any variations to the closest base design. A number of different base designs can be stored in memory 124 and/or industrial design library 128 that serve as common templates for different industrial control product offerings for a given business entity. Based on tags, metadata, etc. in the order, engineering system 120 can identify the closest base design for the order. For example, engineering system 120 can identify base design 200 as the closest base design for the order. Engineering system 120 can also detect any option packs that are included with the order by comparing the order to base design 200. For example, engineering system 120 can determine that the order includes option pack 210 (i.e., includes the addition of component G). As another example, base design(s) and options pack(s) may be directly presented to the user, via user interface 112, as details about the recommended industrial control product, allowing the user to directly select a desired base design and option pack(s). In such example, the process 500 can identify the base design and any option packs directly based on the user selections.

At 506, process 500 can determine whether the order includes any new option packs. For example, engineering system 120 can query industrial design library 128 in order to determine if engineering design files for option pack 210 exist in industrial design library 128. If engineering design files for option pack 210 do not exist in industrial design library 128, then engineering system 120 can determine that option pack 210 is a new option pack (Yes). However, if engineering design files for option pack 210 do exist in industrial design library 128, then engineering system 120 can determine that option pack 210 is not a new option pack (No). If option pack 210 is a new option pack, the process 500 can proceed to 508. However, if option pack 210 is not a new option pack, then process 500 can proceed to 514. Engineering system 120 can execute change detection logic 126 to determine a delta associated with the order relative to the closest base design. Engineering system 120 can then look for data indicative of the determined delta associated with the order in industrial design library 128 to determine if a match exists.

At 508, process 500 can receive engineering design files that were manually created by an engineer for the option pack. For example, an engineer that is a subject matter expert regarding motor control center design can manually create engineering design files (e.g., electrical schematics, three-dimensional mechanical models, control logic, etc.) for the option pack to account for the variation that the option pack includes relative to the base design. Continuing with the example of option pack 210, the engineer can modify one or more base engineering design files associated with the base design to add the component G to the engineering design files, as well as make any necessary additional changes to the base engineering design files that may be required as a result of adding the component G. The engineer can modify the engineering design files to account for the option pack using a variety of suitable computer programs, including computer-aided design programs, mechanical modeling programs, control logic programs, etc. Other types of professionals in addition to engineers may also manually create the engineering design files for the option pack. Of course, the engineering design files can also be manually created by multiple people (e.g., a mechanical engineer and an electrical engineer).

At 510, process 500 can provide the engineering design files that were manually created by the engineer for the option pack for review as part of a governance review process. In some examples, 510 may be an optional step and a governance review may not be required for the engineering design files that were manually created by the engineer for the option pack. However, the governance review process can be an important step to ensure that engineering design files that are ultimately added to industrial design library 128 for automated re-use are of sufficient quality to be appropriate for automated re-use. The governance review process can involve one or more subject matter experts distinct from the engineer or other professional that manually creates the engineering design files for the option pack reviewing the engineering design files to ensure they are of proper quality for automated re-use. For example, in the manual creating of engineering design files for different option packs, mistakes can be made in terms of electrical wiring connections, mechanical modeling, control logic bus, etc. Engineering design files with these errors may not be added to industrial design library 128 unless and until they are corrected.

At 512, process 500 can store the engineering design files that were created manually by the engineer for the option pack in an industrial design library. For example, engineering system 120 can store the engineering design files that were created manually by the engineer for the option pack in industrial design library 128. Engineering system 120 may only store the engineering design files that were created manually by the engineer for the option pack in industrial design library 128 responsive to receiving an indication that the engineering design files for the option pack that were created manually by the engineer based on the variation to the base design were approved based on the governance review. Engineering system 120 can execute change detection logic 126 to identify changes made to the engineering design files that were created manually by the engineer to capture a "delta" associated with the option pack and can subsequently save data indicative of the delta associated with the option pack to industrial design library 128. Since the engineering design files for the option pack are now stored in industrial design library 128, the engineering design files for the option pack can be automatically re-used the next time a customer places an order for the option pack such that the manual process of creating the engineering design files for the option pack does not have to be repeated in order to fulfill the subsequent order for the option pack.

At 514, process 500 can automatically generate engineering design files for the industrial control product ordered. For example, responsive to determining that engineering design files for option pack 210 already exist in industrial design library 128, engineering system 120 can retrieve the engineering design files for option pack 210 from industrial design library 128. In this case, no manual engineering efforts are needed to accommodate the variation to base design 200 defined by option pack 210 because the appropriate engineering design files needed to accommodate the variation to base design 200 defined by option pack 210 already exist in industrial design library 128. Moreover, the engineering design files needed to accommodate the variation to base design 200 defined by option pack 210 that already exist in industrial design library 128 can be ensured to be of high quality if a governance review process (e.g., 510) is implemented.

At 516, process 500 can provide the engineering design files for the industrial control product to a manufacturing system. For example, engineering system 120 can provide the appropriate engineering design files for the industrial control product, whether generated automatically or manually, to manufacturing system 130. With the appropriate engineering design files for the industrial control product, manufacturing system 130 can then use the engineering design files to manufacture the industrial control product ordered by the user. In cases where the engineering design files are automatically generated for re-use, significant savings in terms of labor and time to delivery can be achieved for industrial control product customers using system 100 to order industrial control products and personnel using system 100 to fulfill orders for industrial control products. Process 500 can be repeated for new orders of industrial control products that come in to build up quality-controlled engineering design files in industrial design library 128 that can be crowdsourced for automated re-use to fit a wide variety of different possible applications.

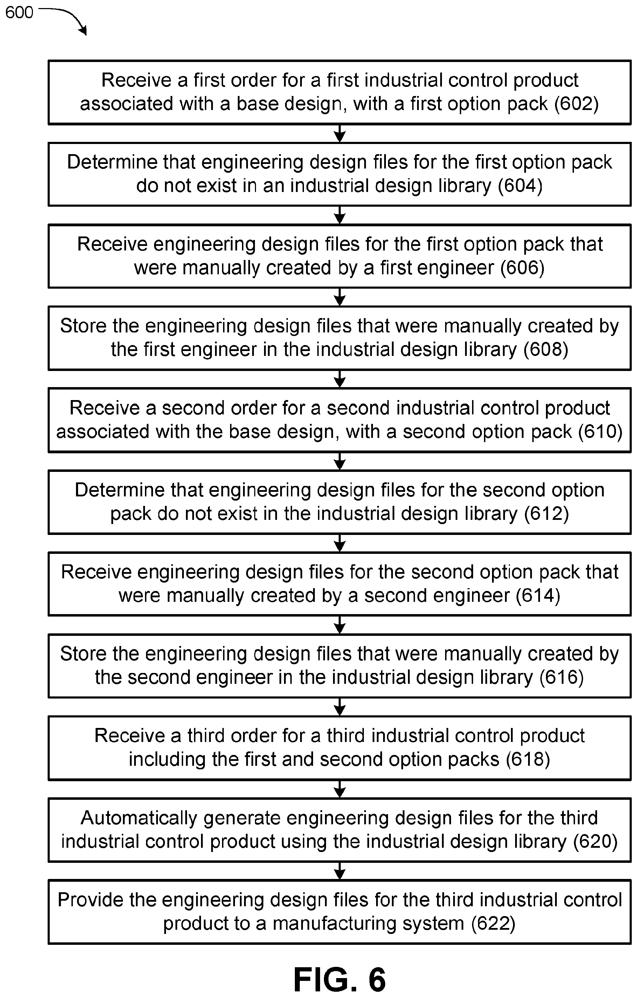

Referring to FIG. 6, a flowchart showing another example process 600 for crowdsourcing engineering designs for industrial control products is shown, in accordance with some aspects of the disclosure. Process 600 can be performed by engineering system 120 as discussed above, for example. Machine-readable instructions for executing process 600 can be stored on one or more non-transitory computer-readable storage media for execution by one or more processors. Process 600 can be used to provide improved efficiency in the engineering workflow for industrial control product orders such that orders for industrial control products for a variety of different applications can be manufactured and delivered more efficiently. Process 600 can be used to eliminate many manual steps required by some previous approaches to manufacturing industrial control products by providing a technical solution that helps engineers and other professionals address the wide variety of different variations to industrial control product orders that may be required to fit different applications.

At 602, process 600 can receive a first order for a first industrial control product associated with a base design and including a first option pack that is a first variation to the base design. For example, engineering system 120 can receive an order for a first motor control center associated with base design 200 and including option pack 210 that is a first variation to base design 200 (adding component G) from ordering system 110. The first order for the first motor control center can be submitted by a first user via one or more inputs provided by the first user to user interface 112. The first order for the first motor control center can be submitted based on a recommendation provided by ordering system 110 to the first user in accordance with one or more parameters submitted by the first user via user interface 112, where the parameters define an industrial application associated with the first user.

At 604, process 600 can determine that the first option pack is new responsive to determining that engineering design files for the first option pack do not exist in an industrial design library. For example, engineering system 120 can query industrial design library 128 in order to determine if engineering design files for option pack 210 exist in industrial design library 128. Responsive to determining that engineering design files for option pack 210 do not exist in industrial design library 128, engineering system 120 can determine that option pack 210 is a new option pack. As noted, millions of different possible combinations of options are possible for industrial control products such as motor control centers, so the inclusion of a new option pack with an industrial control product order is not necessarily a rare occurrence.

At 606, process 600 can receive engineering design files for the first option pack that were created manually by a first engineer based on the first variation to the base design. For example, an engineer that is a subject matter expert regarding motor control center design can manually create engineering design files (e.g., electrical schematics, three-dimensional mechanical models, control logic, etc.) for option pack 210 to account for the first variation that option pack 210 includes relative to base design 200. The engineer can modify one or more base engineering design files associated with base design 200 to add the component G to the base engineering design files, as well as make any necessary additional changes to the base engineering design files that may be required as a result of adding the component G. The engineer can modify the base engineering design files to account for the first option pack using a variety of suitable computer programs, including computer-aided design programs, mechanical modeling programs, control logic programs, etc. Other types of professionals in addition to engineers may also manually create the engineering design files for the first option pack received at 606.

At 608, process 600 can store the engineering design files for the first option pack that were created manually by the first engineer based on the first variation to the base design in the industrial design library. For example, engineering system 120 can save the engineering design files that were manually created by the first engineer to account for the addition of the component G as part of option pack 210 to industrial library 128. In some examples, the engineering design files manually created by the first engineer can be submitted for governance review such that the engineering design files manually created by the first engineer for option pack 210 are reviewed by additional subject matter experts to ensure quality of the designs. In such examples, engineering system 120 may only store the engineering design files manually created by the first engineer for option pack 210 to industrial design library 128 responsive to receiving an indication that the engineering design files manually created by the first engineer for option pack 210 were approved based on the governance review (e.g., based on an input provided by one or more governance reviewers). Engineering system 120 can execute change detection logic 126 to identify changes made to the engineering design files that were created manually by the first engineer for option pack 210 to capture a delta associated with option pack 210 and can subsequently save data indicative of the delta associated with option pack 210 to industrial design library 128.

At 610, process 600 can receive a second order for a second industrial control product, the second industrial control product associated with the base design and including a second option pack that is a second variation to the base design. For example, engineering system 120 can receive an order for a second motor control center associated with base design 200 and including option pack 220 that is a second variation to base design 200 (moving component E, deleting component F) from ordering system 110. The second order for the second motor control center can be submitted by a second user via one or more inputs provided by the second user to user interface 112. The second order for the second motor control center can be submitted based on a recommendation provided by ordering system 110 to the second user in accordance with one or more parameters submitted by the second user via user interface 112, where the parameters define an industrial application associated with the second user. The second user does not necessarily need to be a different user from the first user.

At 612, process 600 can determine that the second option pack is new responsive to determining that engineering design files for the second option pack do not exist in the industrial design library. For example, engineering system 120 can query industrial design library 128 in order to determine if engineering design files for option pack 220 exist in industrial design library 128. Responsive to determining that engineering design files for option pack 220 do not exist in industrial design library 128, engineering system 120 can determine that option pack 220 is a new option pack. Again, as noted, millions of different possible combinations of options are possible for industrial control products such as motor control centers.

At 614, process 600 can receive engineering design files for the second option pack that were created manually by a second engineer based on the second variation to the base design. For example, an engineer that is a subject matter expert regarding motor control center design can manually create engineering design files (e.g., electrical schematics, three-dimensional mechanical models, control logic, etc.) for option pack 220 to account for the second variation that option pack 220 includes relative to base design 200. The engineer can modify one or more base engineering design files associated with base design 200 to move the component E within the base engineering design files and delete the component F from the base engineering design files. The engineer can also make any necessary additional changes to the base engineering design files that may be required as a result of moving the component E and/or deleting the component F. The engineer can modify the base engineering design files to account for the second option pack using a variety of suitable computer programs, including computer-aided design programs, mechanical modeling programs, control logic programs, etc. Other types of professionals in addition to engineers may also manually create the engineering design files for the second option pack received at 614. Engineering system 120 can execute change detection logic 126 to identify changes made to the engineering design files that were created manually by the second engineer for option pack 220 to capture a delta associated with option pack 220 and can subsequently save data indicative of the delta associated with option pack 220 to industrial design library 128.

At 616, process 600 can store the engineering design files for the second option pack that were created manually by the second engineer based on the second variation to the base design in the industrial design library. For example, engineering system 120 can save the engineering design files that were manually created by the second engineer to account for moving the component E and deleting the component F as part of option pack 220 to industrial library 128. In some examples, the engineering design files manually created by the second engineer can be submitted for governance review such that the engineering design files manually created by the second engineer for option pack 220 are reviewed by additional subject matter experts to ensure quality of the designs. In such examples, engineering system 120 may only store the engineering design files manually created by the second engineer for option pack 220 to industrial design library 128 responsive to receiving an indication that the engineering design files manually created by the second engineer for option pack 220 were approved based on the governance review.

At 618, process 600 can receive a third order for a third industrial control product, the third industrial control product associated with the base design and including the first option pack and the second option pack. For example, engineering system 120 can receive an order for a third motor control center associated with base design 200 and including both option pack 210 that is a first variation to base design 200 (adding component G) and option pack 220 that is a second variation to base design 200 (moving component E, deleting component F) from ordering system 110. The third order for the third motor control center can be submitted by a third user via one or more inputs provided by the third user to user interface 112. The third order for the third motor control center can be submitted based on a recommendation provided by ordering system 110 to the third user in accordance with one or more parameters submitted by the third user via user interface 112, where the parameters define an industrial application associated with the third user. The third user does not necessarily need to be a different user from the first user and/or the second user.

At 620, process 600 can automatically generate engineering design files for the third industrial control product using the engineering design files for the first option pack that were created manually by the first engineer based on the first variation to the base design and the engineering design files for the second option pack that were created manually by the second engineer based on the second variation to the base design stored in the industrial design library. For example, engineering system 120 can query industrial design library 128 and determine that engineering design files for option pack 210 (e.g., the engineering design files stored at 608) and for option pack 220 (e.g., the engineering design files stored at 616) already exist in industrial design library 128. Accordingly, responsive to making this determination, engineering system 120 can automatically generate engineering design files for the third motor control center by automatically re-using the engineering design files for option pack 210 and for option pack 220 from industrial design library 128. Moreover, the re-used engineering design files for option pack 210 and for option pack 220 from industrial design library 128 can be ensured to be of high quality if a governance review process is implemented before adding engineering design files for re-use to industrial design library 128.

At 622, process 600 can provide the engineering design files for the third industrial control product to a manufacturing system such that the engineering design files for the third industrial control product can be used to manufacture the third industrial control product. For example, engineering system 120 can provide the automatically generated engineering design files for the third motor control center to manufacturing system 130 such that manufacturing system 130 can use the automatically generated engineering design files for the third motor control center to manufacture the third motor control center. Since the engineering design files for the third motor control center are automatically generated by engineering system 120, significant savings in terms of labor and time to delivery can be achieved for both the customer (e.g., the third user) using system 100 as well as personnel using system 100 to fulfill the order for the third motor control center.

It is important to note that the crowdsourcing functionality discussed herein can apply beyond receiving placed orders (e.g., confirmed purchases) for industrial control products. For example, in some scenarios, users of ordering system 110 can interact with user interface 112 to generate a quote for a new variation of an industrial control product. In such cases, the user may not necessarily place an order for an industrial control product, but more generally may submit a request associated with an industrial control product. Moreover, given all of the different possible variations of industrial control product offerings, the crowdsourcing functionality discussed herein can be used to crowdsource "created" products that may or may not have been purchased previously. For example, in response to receiving a request from a user (e.g., a quote request, an order request, etc.) via ordering system 110, an engineer may manually create engineering design files for a new variation of an industrial control product that does not end up actually being purchased or manufactured. However, the engineering design files that were manually created for the new variation of the industrial control product can still be saved to industrial design library 128 to provide added efficiency in terms of order engineering and manufacturing in the future in the event another request for the same variation of the industrial control product (or a similar variation of the industrial control product) is received by engineering system 120.

It should be noted that while the steps of processes 500, 600 are shown in a particular order in FIG. 5 and FIG. 6, in some aspects, processes 500, 600 may not include all steps shown, may include additional steps, or may include the steps in a different order.

This description uses examples to disclose the invention and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.
**The following is a list of further preferred embodiments of the invention:**
Embodiment 1: A method for crowdsourcing engineering designs, the method comprising:
   receiving a first order for a first industrial control product, the first industrial control product associated with a base design and including a first option pack that is a first variation to the base design;
   determining that the first option pack is new responsive to determining that engineering design files for the first option pack do not exist in an industrial design library;
   receiving engineering design files for the first option pack that were created manually based on the first variation to the base design;
   storing the engineering design files for the first option pack that were created manually based on the first variation to the base design in the industrial design library;
   receiving a second order for a second industrial control product, the second industrial control product associated with the base design and including a second option pack that is a second variation to the base design;
   determining that the second option pack is new responsive to determining that engineering design files for the second option pack do not exist in the industrial design library;
   receiving engineering design files for the second option pack that were created manually based on the second variation to the base design;
   storing the engineering design files for the second option pack that were created manually based on the second variation to the base design in the industrial design library;
   receiving a third order for a third industrial control product, the third industrial control product associated with the base design and including the first option pack and the second option pack;
   automatically generating engineering design files for the third industrial control product using the engineering design files for the first option pack that were created manually on the first variation to the base design and the engineering design files for the second option pack that were created manually based on the second variation to the base design stored in the industrial design library; and
   providing the engineering design files for the third industrial control product to a manufacturing system such that the engineering design files for the third industrial control product can be used to manufacture the third industrial control product.
Embodiment 2: The method of embodiment 1, wherein:
   the base design comprises a base design for a motor control center;
   the first variation to the base design comprises a first component that is added to the base design; and
   the second variation to the base design comprises a second component that is moved within the base design.
Embodiment 3: The method of embodiment 1, wherein:
   the base design comprises a base design for a motor control center; and
   the first variation to the base design comprises a different line voltage that is used to power the motor control center.
Embodiment 4: The method of embodiment 3, wherein the base design is associated with base engineering design files for the motor control center, the method further comprising:
   processing the engineering design files for the first option pack that were created manually using difference detection logic in order to identify a difference between the engineering design files for the first option pack and the base engineering design files; and
   storing data indicative of the difference between the engineering design files for the first option pack and the base engineering design files in the industrial design library.
Embodiment 5: The method of embodiment 1, wherein the difference between the engineering design files for the first option pack and the base engineering design files comprises a second electrical component in the engineering design files for the first option pack that replaces a first electrical component in the base engineering design files in accordance with the different line voltage that is used to power the motor control center.
Embodiment 6: The method of embodiment 5, wherein the first electrical component has a first electrical rating, and the second electrical component has a second electrical rating, the first electrical rating being different from the second electrical rating.
Embodiment 7: The method of embodiment 1, wherein the engineering design files for the first option pack comprise at least one of electrical wiring files, mechanical modeling files, or computer numerical control files.
Embodiment 8: The method of embodiment 1, wherein receiving the third order for the third industrial control product comprises receiving the third order for the third industrial control product based on input provided by a user via a user interface.
Embodiment 9: A non-transitory computer-readable storage medium having instructions stored thereon that, when executed by at least one processor, cause the at least one processor to implement operations comprising:
   receiving a first order for a first industrial control product, the first industrial control product associated with a base design and including a first option pack that is a first variation to the base design;
   determining that the first option pack is new responsive to determining that engineering design files for the first option pack do not exist in an industrial design library;
   receiving engineering design files for the first option pack that were created manually based on the first variation to the base design;
   storing the engineering design files for the first option pack that were created manually based on the first variation to the base design in the industrial design library;
   receiving a second order for a second industrial control product, the second industrial control product associated with the base design and including a second option pack that is a second variation to the base design;
   determining that the second option pack is new responsive to determining that engineering design files for the second option pack do not exist in the industrial design library;
   receiving engineering design files for the second option pack that were created manually based on the second variation to the base design;
   storing the engineering design files for the second option pack that were created manually based on the second variation to the base design in the industrial design library;
   receiving a third order for a third industrial control product, the third industrial control product associated with the base design and including the first option pack and the second option pack;
   automatically generating engineering design files for the third industrial control product using the engineering design files for the first option pack that were created manually based on the first variation to the base design and the engineering design files for the second option pack that were created manually based on the second variation to the base design stored in the industrial design library; and
   providing the engineering design files for the third industrial control product to a manufacturing system such that the engineering design files for the third industrial control product can be used to manufacture the third industrial control product.
Embodiment 10: The computer-readable medium of embodiment 9, wherein:
   the base design comprises a base design for a motor control center;
   the first variation to the base design comprises a first component that is added to the base design; and
   the second variation to the base design comprises a second component that is deleted from the base design.
Embodiment 11: The computer-readable medium of embodiment 9, wherein:
   the base design comprises a base design for a motor control center; and
   the first variation to the base design comprises a different control voltage used by the motor control center.
Embodiment 12: The computer-readable medium of embodiment 9, wherein the engineering design files for the third industrial control product comprise at least one of electrical wiring files, mechanical modeling files, or computer numerical control files.
Embodiment 13: The computer-readable medium of embodiment 9, wherein receiving the third order for the third industrial control product comprises receiving the third order for the third industrial control product based on input provided by a user via a user interface.
Embodiment 14: The computer-readable medium of embodiment 9, wherein the base design is associated with base engineering design files, the operations further comprising:
   processing the engineering design files for the first option pack that were created manually using difference detection logic in order to identify a difference between the engineering design files for the first option pack and the base engineering design files; and
   storing data indicative of the difference between the engineering design files for the first option pack and the base engineering design files in the industrial design library.
Embodiment 15: A system comprising:
   one or more processors; and
   one or more non-transitory computer readable storage media having instructions stored thereon that, when executed by the one or more processors, cause the one or more processors to implement operations comprising:
      receiving a first order for a first industrial control product, the first industrial control product associated with a base design and including an option pack that is a variation to the base design;
      determining that the option pack is new responsive to determining that engineering design files for the option pack do not exist in an industrial design library;
      receiving engineering design files for the option pack that were created manually based on the variation to the base design;
      storing the engineering design files for the option pack that were created manually based on the variation to the base design in the industrial design library;
      receiving a second order for a second industrial control product, the second industrial control product associated with the base design and including the option pack that is the variation to the base design;
      automatically generating engineering design files for the second industrial control product using the engineering design files for the option pack that were created manually based on the variation to the base design stored in the industrial design library; and
      providing the engineering design files for the third industrial control product to a manufacturing system such that the engineering design files for the second industrial control product can be used to manufacture the second industrial control product.
Embodiment 16: The system of embodiment 15, wherein:
   the base design comprises a base design for a motor control center; and
   the variation to the base design comprises a different line voltage used by the motor control center.
Embodiment 17: The system of embodiment 15, wherein:
   the base design comprises a base design for a human machine interface system; and
   the variation to the base design comprises a component that is added to the base design.
Embodiment 18: The system of embodiment 15, wherein the base design is associated with base engineering design files, the operations further comprising:
   processing the engineering design files for the option pack that were created manually by the engineer using difference detection logic to identify a difference between the engineering design files for the option pack and the base engineering design files; and
   storing data indicative of the difference between the engineering design files for the option pack and the base engineering design files in the industrial design library.
Embodiment 19: The system of embodiment 15, wherein the difference between the engineering design files for the option pack and the base engineering design files comprises a component that is added, deleted, or moved.
Embodiment 20: The system of embodiment 15, the operations further comprising:
   submitting the engineering design files for the option pack that were created manually by the engineer based on the variation to the base design for governance review; and
   receiving an indication that the engineering design files for the option pack that were created manually by the engineer based on the variation to the base design were approved based on the governance review;
   wherein storing the engineering design files for the option pack that were created manually by the engineer based on the variation to the base design in the industrial design library comprises storing the engineering design files for the option pack that were created manually by the engineer based on the variation to the base design in the industrial design library responsive to receiving the indication that the engineering design files for the option pack that were created manually by the engineer based on the variation to the base design were approved based on the governance review.

## Claims

1. A method for crowdsourcing engineering designs, the method comprising:
receiving (602) a first order for a first industrial control product, the first industrial control product associated with a base design and including a first option pack that is a first variation to the base design, wherein the industrial control product comprises one or more of a motor control center, MCC, a variable frequency drive, VFD, and a human machine interface, HMI;
determining (604) that the first option pack is new responsive to determining that engineering design files for the first option pack do not exist in an industrial design library;
receiving (606) engineering design files for the first option pack that were created manually based on the first variation to the base design;
storing (608) the engineering design files for the first option pack that were created manually based on the first variation to the base design in the industrial design library;
receiving (610) a second order for a second industrial control product, the second industrial control product associated with the base design and including a second option pack that is a second variation to the base design;
determining (612) that the second option pack is new responsive to determining that engineering design files for the second option pack do not exist in the industrial design library;
receiving (614) engineering design files for the second option pack that were created manually based on the second variation to the base design;
storing (616) the engineering design files for the second option pack that were created manually based on the second variation to the base design in the industrial design library;
receiving (618) a third order for a third industrial control product, the third industrial control product associated with the base design and including the first option pack and the second option pack;
automatically generating (620) engineering design files for the third industrial control product using the engineering design files for the first option pack that were created manually on the first variation to the base design and the engineering design files for the second option pack that were created manually based on the second variation to the base design stored in the industrial design library, wherein the engineering design files include various types of computer-aided design, CAD, files including electrical wiring design schematics, three-dimensional mechanical modeling files comprising spatial modeling and/or thermal modeling; and
providing (622) the engineering design files for the third industrial control product to a manufacturing system such that the engineering design files for the third industrial control product can be used to manufacture the third industrial control product.

2. The method of claim 1, wherein:
the base design comprises a base design for a motor control center;
the first variation to the base design comprises a first component that is added to the base design; and
the second variation to the base design comprises a second component that is moved within the base design.

3. The method of claim 1 or 2, wherein:
the base design comprises a base design for a motor control center; and
the first variation to the base design comprises a different line voltage that is used to power the motor control center.

4. The method of claim 3, wherein the base design is associated with base engineering design files for the motor control center, the method further comprising:
processing the engineering design files for the first option pack that were created manually using difference detection logic in order to identify a difference between the engineering design files for the first option pack and the base engineering design files; and
storing data indicative of the difference between the engineering design files for the first option pack and the base engineering design files in the industrial design library.

5. The method of one of claims 1 to 4, wherein the difference between the engineering design files for the first option pack and the base engineering design files comprises a second electrical component in the engineering design files for the first option pack that replaces a first electrical component in the base engineering design files in accordance with the different line voltage that is used to power the motor control center.

6. The method of claim 5, wherein the first electrical component has a first electrical rating, and the second electrical component has a second electrical rating, the first electrical rating being different from the second electrical rating.

7. The method of claim 1, wherein the engineering design files for the first option pack comprise at least one of electrical wiring files, mechanical modeling files, or computer numerical control files; or
wherein receiving the third order for the third industrial control product comprises receiving the third order for the third industrial control product based on input provided by a user via a user interface.

8. A non-transitory computer-readable storage medium having instructions stored thereon that, when executed by at least one processor, cause the at least one processor to implement operations comprising:
receiving (602) a first order for a first industrial control product, the first industrial control product associated with a base design and including a first option pack that is a first variation to the base design, wherein the industrial control product comprises one or more of a motor control center, MCC, a variable frequency drive, VFD, and a human machine interface, HMI;
determining (604) that the first option pack is new responsive to determining that engineering design files for the first option pack do not exist in an industrial design library;
receiving (606) engineering design files for the first option pack that were created manually based on the first variation to the base design;
storing (608) the engineering design files for the first option pack that were created manually based on the first variation to the base design in the industrial design library;
receiving (610) a second order for a second industrial control product, the second industrial control product associated with the base design and including a second option pack that is a second variation to the base design;
determining (612) that the second option pack is new responsive to determining that engineering design files for the second option pack do not exist in the industrial design library;
receiving (614) engineering design files for the second option pack that were created manually based on the second variation to the base design;
storing (616) the engineering design files for the second option pack that were created manually based on the second variation to the base design in the industrial design library;
receiving (618) a third order for a third industrial control product, the third industrial control product associated with the base design and including the first option pack and the second option pack;
automatically generating (620) engineering design files for the third industrial control product using the engineering design files for the first option pack that were created manually based on the first variation to the base design and the engineering design files for the second option pack that were created manually based on the second variation to the base design stored in the industrial design library, wherein the engineering design files include various types of computer-aided design, CAD, files including electrical wiring design schematics, three-dimensional mechanical modeling files comprising spatial modeling and/or thermal modeling; and
providing (622) the engineering design files for the third industrial control product to a manufacturing system such that the engineering design files for the third industrial control product can be used to manufacture the third industrial control product.

9. The computer-readable medium of claim 8, wherein:
the base design comprises a base design for a motor control center;
the first variation to the base design comprises a first component that is added to the base design; and
the second variation to the base design comprises a second component that is deleted from the base design; or
wherein:
the base design comprises a base design for a motor control center; and
the first variation to the base design comprises a different control voltage used by the motor control center.

10. The computer-readable medium of claim 8, wherein the engineering design files for the third industrial control product comprise at least one of electrical wiring files, mechanical modeling files, or computer numerical control files; or
wherein receiving the third order for the third industrial control product comprises receiving the third order for the third industrial control product based on input provided by a user via a user interface.

11. The computer-readable medium of claim 8, wherein the base design is associated with base engineering design files, the operations further comprising:
processing the engineering design files for the first option pack that were created manually using difference detection logic in order to identify a difference between the engineering design files for the first option pack and the base engineering design files; and
storing data indicative of the difference between the engineering design files for the first option pack and the base engineering design files in the industrial design library.

12. A system comprising:
one or more processors; and
one or more non-transitory computer readable storage media having instructions stored thereon that, when executed by the one or more processors, cause the one or more processors to implement operations comprising:
receiving (602) a first order for a first industrial control product, the first industrial control product associated with a base design and including an option pack that is a variation to the base design, wherein the industrial control product comprises one or more of a motor control center, MCC, a variable frequency drive, VFD, and a human machine interface, HMI;
determining (604) that the option pack is new responsive to determining that engineering design files for the option pack do not exist in an industrial design library;
receiving (606) engineering design files for the option pack that were created manually based on the variation to the base design;
storing (608) the engineering design files for the option pack that were created manually based on the variation to the base design in the industrial design library;
receiving (618) a second order for a second industrial control product, the second industrial control product associated with the base design and including the option pack that is the variation to the base design;
automatically generating (620) engineering design files for the second industrial control product using the engineering design files for the option pack that were created manually based on the variation to the base design stored in the industrial design library, wherein the engineering design files include various types of computer-aided design, CAD, files including electrical wiring design schematics, three-dimensional mechanical modeling files comprising spatial modeling and/or thermal modeling; and
providing (622) the engineering design files for the second industrial control product to a manufacturing system such that the engineering design files for the second industrial control product can be used to manufacture the second industrial control product.

13. The system of claim 12, wherein:
the base design comprises a base design for a motor control center; and
the variation to the base design comprises a different line voltage used by the motor control center; or
wherein:
the base design comprises a base design for a human machine interface system; and
the variation to the base design comprises a component that is added to the base design.

14. The system of claim 12, wherein the base design is associated with base engineering design files, the operations further comprising:
processing the engineering design files for the option pack that were created manually by the engineer using difference detection logic to identify a difference between the engineering design files for the option pack and the base engineering design files; and storing data indicative of the difference between the engineering design files for the option pack and the base engineering design files in the industrial design library; or
wherein the difference between the engineering design files for the option pack and the base engineering design files comprises a component that is added, deleted, or moved.

15. The system of claim 12, the operations further comprising:
submitting the engineering design files for the option pack that were created manually by the engineer based on the variation to the base design for governance review; and
receiving an indication that the engineering design files for the option pack that were created manually by the engineer based on the variation to the base design were approved based on the governance review;
wherein storing the engineering design files for the option pack that were created manually by the engineer based on the variation to the base design in the industrial design library comprises storing the engineering design files for the option pack that were created manually by the engineer based on the variation to the base design in the industrial design library responsive to receiving the indication that the engineering design files for the option pack that were created manually by the engineer based on the variation to the base design were approved based on the governance review.

## Patentansprüche

1. Verfahren zum Crowdsourcing von technischen Entwürfen, wobei das Verfahren umfasst:
Empfangen (602) einer ersten Bestellung für ein erstes industrielles Steuerungsprodukt, wobei das erste industrielle Steuerungsprodukt einem Basisentwurf zugeordnet ist und ein erstes Optionspaket umfasst, das eine erste Variante des Basisentwurfs darstellt, wobei das industrielle Steuerungsprodukt eines oder mehrere umfasst von: einer Motorsteuerungszentrale (MCC), einem Frequenzumrichter (VFD) und einer Mensch-Maschine-Schnittstelle (HMI);
Bestimmen (604), dass das erste Optionspaket neu ist, wenn bestimmt wird, dass technische Entwurfsdateien für das erste Optionspaket in einer Bibliothek industrieller Entwürfe nicht vorhanden sind;
Empfangen (606) von technischen Entwurfsdateien für das erste Optionspaket, die manuell auf der Grundlage der ersten Variante des Basisentwurfs erstellt wurden;
Speichern (608) der technischen Entwurfsdateien für das erste Optionspaket, die manuell auf der Grundlage der ersten Variante des Basisentwurfs erstellt wurden, in der Bibliothek industrieller Entwürfe;
Empfangen (610) einer zweiten Bestellung für ein zweites industrielles Steuerungsprodukt, wobei das zweite industrielle Steuerungsprodukt dem Basisentwurf zugeordnet ist und ein zweites Optionspaket umfasst, das eine zweite Variante des Basisentwurfs darstellt;
Bestimmen (612), dass das zweite Optionspaket neu ist, wenn bestimmt wird, dass technische Entwurfsdateien für das zweite Optionspaket nicht in der Bibliothek industrieller Entwürfe vorhanden sind;
Empfangen (614) von technischen Entwurfsdateien für das zweite Optionspaket, die manuell auf der Grundlage der zweiten Variante des Basisentwurfs erstellt wurden;
Speichern (616) der technischen Entwurfsdateien für das zweite Optionspaket, die manuell auf der Grundlage der zweiten Variante des Basisentwurfs erstellt wurden, in der Bibliothek industrieller Entwürfe;
Empfangen (618) einer dritten Bestellung für ein drittes industrielles Steuerungsprodukt, wobei das dritte industrielle Steuerungsprodukt dem Basisentwurf zugeordnet ist und das erste Optionspaket und das zweite Optionspaket umfasst;
automatisches Erzeugen (620) von technischen Entwurfsdateien für das dritte industrielle Steuerungsprodukt unter Verwendung der technischen Entwurfsdateien für das erste Optionspaket, die manuell auf der Grundlage der ersten Variante des Basisentwurfs erstellt wurden, und der technischen Entwurfsdateien für das zweite Optionspaket, die manuell auf der Grundlage der zweiten Variante des Basisentwurfs erstellt wurden und in der Bibliothek industrieller Entwürfe gespeichert sind, wobei die Entwurfsdateien verschiedene Arten von computergestützen Entwurfs-, CAD-, Dateien umfassen, einschließlich elektrischer Verdrahtungsentwürfen, dreidimensionaler mechanischer Modellierungsdateien, die räumliche Modellierung und/oder thermische Modellierung umfassen, dreidimensionaler mechanischer Modellierungsdateien, die räumliche Modellierung und/oder thermische Modellierung umfassen; und
Bereitstellen (622) der technischen Entwurfsdateien für das dritte industrielle Steuerungsprodukt für ein Fertigungssystem derart, dass die technischen Entwurfsdateien für das dritte industrielle Steuerungsprodukt zur Herstellung des dritten industriellen Steuerungsprodukts verwendbar sind.

2. Verfahren nach Anspruch 1, wobei
der Basisentwurf ein Basisentwurf für eine Motorsteuerungszentrale umfasst;
die erste Variante des Basisentwurfs eine erste Komponente umfasst, die dem Basisentwurf hinzugefügt wird; und
die zweite Variante des Basisentwurfs eine zweite Komponente umfasst, die innerhalb des Basisentwurfs verschoben wird.

3. Verfahren nach Anspruch 1 oder 2, wobei
der Basisentwurf ein Basisentwurf für eine Motorsteuerungszentrale umfasst; und
die erste Variante zum Basisentwurf eine andere Netzspannung aufweist, die zur Stromversorgung der Motorsteuerungszentrale verwendet wird.

4. Verfahren nach Anspruch 3, wobei der Basisentwurf Basis-Entwurfsdateien für die Motorsteuerungszentrale zugeordnet, wobei das Verfahren ferner umfasst:
Verarbeiten der Entwurfsdateien für das erste Optionspaket, die manuell erstellt wurden unter Verwendung einer Differenzerkennungslogik, um eine Differenz zwischen den technischen Entwurfsdateien für das erste Optionspaket und den Basis-Entwurfsdateien zu identifizieren; und
Speichern von Daten, die die Differenz zwischen den technischen Entwurfsdateien für das erste Optionspaket und den Basis-Entwurfsdateien in der Bibliothek industrieller Entwürfe angeben.

5. Verfahren nach einem der Ansprüche 1 bis 4, wobei der Unterschied zwischen den technischen Entwurfsdateien für das erste Optionspaket und den Basis-Entwurfsdateien eine zweite elektrische Komponente in den technischen Entwurfsdateien für das erste Optionspaket umfasst, die eine erste elektrische Komponente in den Basis-Entwurfsdateien entsprechend der unterschiedlichen Netzspannung ersetzt, die zur Stromversorgung der Motorsteuerungszentrale verwendet wird.

6. Verfahren nach Anspruch 5, wobei die erste elektrische Komponente eine erste elektrische Nennleistung aufweist und die zweite elektrische Komponente eine zweite elektrische Nennleistung aufweist, wobei sich die erste elektrische Nennleistung von der zweiten elektrischen Nennleistung unterscheidet.

7. Verfahren nach Anspruch 1, wobei die technischen Entwurfsdateien für das erste Optionspaket elektrische Verdrahtungsdateien und/oder mechanische Modellierungsdateien und/oder numerische Steuerungsdateien umfassen; oder
wobei das Empfangen der dritten Bestellung für das dritte industrielle Steuerungsprodukt Empfangen der dritten Bestellung für das dritte industrielle Steuerungsprodukt auf der Grundlage von Eingaben umfasst, die von einem Benutzer über eine Benutzerschnittstelle bereitgestellt werden.

8. Nicht-flüchtiges, computerlesbares Speichermedium mit darauf gespeicherten Anweisungen, die bei Ausführung durch mindestens einen Prozessor den mindestens einen Prozessor dazu veranlassen, Operationen durchzuführen mit:
Empfangen (602) einer ersten Bestellung für ein erstes industrielles Steuerungsprodukt, wobei das erste industrielle Steuerungsprodukt einem Basisentwurf zugeordnet ist und ein erstes Optionspaket umfasst, das eine erste Variante des Basisentwurfs darstellt, wobei das industrielle Steuerungsprodukt eines oder mehrere umfasst von: einer Motorsteuerungszentrale (MCC), einem Frequenzumrichter (VFD) und einer Mensch-Maschine-Schnittstelle (HMI);
Bestimmen (604), dass das erste Optionspaket neu ist, wenn bestimmt wird, dass technische Entwurfsdateien für das erste Optionspaket in einer Bibliothek industrieller Entwürfe nicht vorhanden sind;
Empfangen (606) von technischen Entwurfsdateien für das erste Optionspaket, die manuell auf der Grundlage der ersten Variante des Basisentwurfs erstellt wurden;
Speichern (608) der technischen Entwurfsdateien für das erste Optionspaket, die manuell auf der Grundlage der ersten Variante des Basisentwurfs erstellt wurden, in der Bibliothek industrieller Entwürfe;
Empfangen (610) einer zweiten Bestellung für ein zweites industrielles Steuerungsprodukt, wobei das zweite industrielle Steuerungsprodukt dem Basisentwurf zugeordnet ist und ein zweites Optionspaket umfasst, das eine zweite Variante des Basisentwurfs darstellt;
Bestimmen (612), dass das zweite Optionspaket neu ist, wenn bestimmt wird, dass technische Entwurfsdateien für das zweite Optionspaket nicht in der Bibliothek industrieller Entwürfe vorhanden sind;
Empfangen (614) von technischen Entwurfsdateien für das zweite Optionspaket, die manuell auf der Grundlage der zweiten Variante des Basisentwurfs erstellt wurden;
Speichern (616) der technischen Entwurfsdateien für das zweite Optionspaket, die manuell auf der Grundlage der zweiten Variante des Basisentwurfs erstellt wurden, in der Bibliothek industrieller Entwürfe;
Empfangen (618) einer dritten Bestellung für ein drittes industrielles Steuerungsprodukt, wobei das dritte industrielle Steuerungsprodukt dem Basisentwurf zugeordnet ist und das erste Optionspaket und das zweite Optionspaket umfasst;
automatisches Erzeugen (620) von technischen Entwurfsdateien für das dritte industrielle Steuerungsprodukt unter Verwendung der technischen Entwurfsdateien für das erste Optionspaket, die manuell auf der Grundlage der ersten Variante des Basisentwurfs erstellt wurden, und der technischen Entwurfsdateien für das zweite Optionspaket, die manuell auf der Grundlage der zweiten Variante des Basisentwurfs erstellt wurden, der in der Bibliothek industrieller Entwürfe gespeichert ist, wobei die technischen Entwurfsdateien verschiedene Arten von computergestützten Entwurfs-, CAD-, Dateien einschließlich elektrischer Verdrahtungsentwürfe, dreidimensionaler mechanischer Modellierungsdateien, die räumliche Modellierung und/oder thermische Modellierung umfassen, und
Bereitstellen (622) der technischen Entwurfsdateien für das dritte industrielle Steuerungsprodukt für ein Fertigungssystem derart, dass die technischen Entwurfsdateien für das dritte industrielle Steuerungsprodukt zur Herstellung des dritten industriellen Steuerungsprodukts verwendbar sind.

9. Computerlesbares Medium nach Anspruch 8, wobei:
der Basisentwurf ein Basisentwurf für eine Motorsteuerungszentrale umfasst;
die erste Variante des Basisentwurfs eine erste Komponente umfasst, die dem Basisentwurf hinzugefügt wird; und
die zweite Variante des Basisentwurfs eine zweite Komponente umfasst, die aus dem Basisentwurf gelöscht wird; oder
wobei
der Basisentwurf ein Basisentwurf für eine Motorsteuerungszentrale umfasst; und
die erste Variante des Basisentwurfs eine andere Steuerspannung aufweist, die von der Motorsteuerungszentrale verwendet wird.

10. Computerlesbares Medium nach Anspruch 8, wobei die technischen Entwurfsdateien für das dritte industrielle Steuerungsprodukt elektrische Verdrahtungsdateien und/oder mechanische Modellierungsdateien und/ oder computergesteuerte numerische Steuerungsdateien umfassen; oder
wobei das Empfangen der dritten Bestellung für das dritte industrielle Steuerungsprodukt Empfangen der dritten Bestellung für das dritte industrielle Steuerungsprodukt auf der Grundlage von Eingaben umfasst, die von einem Benutzer über eine Benutzerschnittstelle bereitgestellt werden.

11. Computerlesbares Medium nach Anspruch 8, wobei der Basisentwurf Basis-Entwurfsdateien zugeordnet ist, wobei die Operationen ferner umfassen:
Verarbeiten der manuell erstellten technischen Entwurfsdateien für das erste Optionspaket unter Verwendung einer Differenzerkennungslogik, um eine Differenz zwischen den technischen Entwurfsdateien für das erste Optionspaket und den Basis-Entwurfsdateien zu identifizieren; und
Speichern von Daten, die die Differenz zwischen den technischen Entwurfsdateien für das erste Optionspaket und den Basis-Entwurfsdateien in der Bibliothek industrieller Entwürfe anzeigen.

12. System, mit:
einem oder mehreren Prozessoren; und
einem oder mehreren nicht-flüchtigen computerlesbaren Speichermedien, auf denen Anweisungen gespeichert sind, die bei Ausführung durch den einen oder die mehreren Prozessoren den einen oder die mehreren Prozessoren dazu veranlassen, Operationen zu implementieren mit:
Empfangen (602) einer ersten Bestellung für ein erstes industrielles Steuerungsprodukt, wobei das erste industrielle Steuerungsprodukt einem Basisentwurf zugeordnet ist und ein Optionspaket enthält, das eine Variante des Basisentwurfs darstellt, wobei das industrielle Steuerungsprodukt ein oder mehrere von einer Motorsteuerungszentrale (MCC), einem Frequenzumrichter (VFD) und einer Mensch-Maschine-Schnittstelle (HMI) umfasst;
Bestimmen (604), dass das Optionspaket neu ist, wenn bestimmt wird, dass technische Entwurfsdateien für das Optionspaket nicht in einer Bibliothek industrieller Entwürfe vorhanden sind;
Empfangen (606) von technischen Entwurfsdateien für das Optionspaket, die manuell auf der Grundlage der Variante des Basisentwurfs erstellt wurden;
Speichern (608) der technischen Entwurfsdateien für das Optionspaket, die manuell auf der Grundlage der Variante des Basisentwurfs erstellt wurden, in der Bibliothek industrieller Entwürfe;
Empfangen (618) einer zweiten Bestellung für ein zweites industrielles Steuerungsprodukt, wobei das zweite industrielle Steuerungsprodukt dem Basisentwurf zugeordnet ist und das Optionspaket enthält, das die Variante des Basisentwurfs darstellt;
automatisches Erzeugen (620) von technischen Entwurfsdateien für das zweite industrielle Steuerungsprodukt unter Verwendung der technischen Entwurfsdateien für das Optionspaket, die manuell auf der Grundlage der in der Bibliothek industrieller Entwürfe gespeicherten Variante des Basisentwurfs erstellt wurden, wobei die technischen Entwurfsdateien verschiedene Arten von computergestützten Entwurfs-, CAD-, Dateien umfassen, einschließlich elektrischer Verdrahtungsentwürfe, dreidimensionaler mechanischer Modellierungsdateien mit räumlicher Modellierung und/oder thermischer Modellierung; und
Bereitstellen (622) der technischen Entwurfsdateien für das zweite industrielle Steuerungsprodukt für ein Fertigungssystem derart, dass die technischen Entwurfsdateien für das zweite industrielle Steuerungsprodukt zur Herstellung des zweiten industriellen Steuerungsprodukts verwendbar sind.

13. System nach Anspruch 12, wobei:
der Basisentwurf ein Basisentwurf für eine Motorsteuerungszentrale umfasst; und
die Variante des Basisentwurfs eine andere von der Motorsteuerungszentrale verwendete Netzspannung aufweist; oder
wobei:
der Basisentwurf ein Basisentwurf für ein Mensch-Maschine-Schnittstellensystem umfasst; und
die Variante des Basisentwurfs eine Komponente aufweist, die dem Basisentwurf hinzugefügt wird.

14. System nach Anspruch 12, wobei der Basisentwurf Basis-Entwurfsdateien zugeordnet ist und die Operationen ferner umfassen:
Verarbeiten der technischen Entwurfsdateien für das Optionspaket, die manuell von einem Ingenieur erstellt wurden, unter Verwendung einer Differenzerkennungslogik, um eine Differenz zwischen den technischen Entwurfsdateien für das Optionspaket und den Basis-Entwurfsdateien zu identifizieren; und
Speichern von Daten, die die Differenz zwischen den technischen Entwurfsdateien für das Optionspaket und den Basis-Entwurfsdateien kennzeichnen, in der Bibliothek industrieller Entwürfe; oder
wobei die Differenz zwischen den technischen Entwurfsdateien für das Optionspaket und den Basis-Entwurfsdateien eine Komponente aufeist, die hinzugefügt, gelöscht oder verschoben wird.

15. Das System nach Anspruch 12, wobei die Operationen ferner umfassen:
Übermitteln der technischen Entwurfsdateien für das Optionspaket, die manuell vom Ingenieur auf der Grundlage der Variante des Basisentwurfs erstellt wurden, zur Überprüfung auf Regelkonformität; und
Empfangen einer Angabe, dass die technischen Entwurfsdateien für das Optionspaket, die manuell vom Ingenieur auf der Grundlage der Variante des Basisentwurfs erstellt wurden, auf der Grundlage der Überprüfung auf Regelkonformität genehmigt wurden;
wobei das Speichern der technischen Entwurfsdateien für das Optionspaket, die manuell vom Ingenieur auf der Grundlage der Variante des Basisentwurfs erstellt wurden, in der Bibliothek industrieller Entwürfe Speichern der technischen Entwurfsdateien für das Optionspaket umfasst, die vom Ingenieur auf der Grundlage der Variante des Basisentwurfs manuell erstellt wurden, in der Bibliothek industrieller Entwürfe als Reaktion auf den Erhalt der Angabe, dass die Entwurfsdateien für das Optionspaket, die vom Ingenieur manuell auf der Grundlage der Variante des Basisentwurfs erstellt wurden, auf der Grundlage der Prüfung auf Regelkonformität genehmigt wurden.

## Revendications

1. Procédé de crowdsourcing de conceptions d'ingénierie, le procédé comprenant :
recevoir (602) une première commande pour un premier produit de commande industrielle, le premier produit de commande industrielle associé à une conception de base et incluant un premier pack d'options qui est une première variation de la conception de base, dans lequel le produit de commande industrielle comprend un ou plusieurs des éléments suivants : un centre de commande de moteur (MCC), un entraînement à fréquence variable (VFD), et une interface homme-machine (HMI) ;
déterminer (604) que le premier pack d'options est nouveau en réponse à la détermination que les fichiers de conception technique pour le premier pack d'options n'existent pas dans une bibliothèque de conception industrielle ;
recevoir (606) les fichiers de conception technique pour le premier pack d'options qui ont été créés manuellement sur la base de la première variation de la conception de base ;
stocker (608) les fichiers de conception technique pour le premier pack d'options qui ont été créés manuellement sur la base de la première variation de la conception de base dans la bibliothèque de conception industrielle ;
recevoir (610) une deuxième commande pour un deuxième produit de commande industrielle, le deuxième produit de commande industrielle associé à la conception de base et incluant un deuxième pack d'options qui est une deuxième variation de la conception de base ;
déterminer (612) que le deuxième pack d'options est nouveau en réponse à la détermination que les fichiers de conception technique pour le deuxième pack d'options n'existent pas dans la bibliothèque de conception industrielle ;
recevoir (614) les fichiers de conception technique pour le deuxième pack d'options qui ont été créés manuellement sur la base de la deuxième variation de la conception de base ;
stocker (616) les fichiers de conception technique pour le deuxième pack d'options qui ont été créés manuellement sur la base de la deuxième variation du dessin ou conception de base dans la bibliothèque de conception industrielle ;
recevoir (618) une troisième commande pour un troisième produit de commande industrielle, le troisième produit de commande industrielle associé à la conception de base et incluant le premier pack d'options et le deuxième pack d'options ;
générer (620) automatiquement des fichiers de conception technique pour le troisième produit de commande industrielle en utilisant les fichiers de conception technique pour le premier pack d'options qui ont été créés manuellement sur la première variation de la conception de base et les fichiers de conception technique pour le deuxième pack d'options qui ont été créés manuellement sur la base de la deuxième variation de la conception de base stockée dans la bibliothèque de conception industrielle, dans lequel les fichiers de conception technique incluent divers types de fichiers de conception assistée par ordinateur (CAO), y compris des schémas de conception de câblage électrique, des fichiers de modélisation mécanique tridimensionnelle comprenant la modélisation spatiale et/ou la modélisation thermique ; et
fournir (622) les fichiers de conception technique pour le troisième produit de commande industrielle à un système de fabrication de sorte que les fichiers de conception technique pour le troisième produit de commande industrielle puissent être utilisés pour fabriquer le troisième produit de commande industrielle.

2. Procédé selon la revendication 1, dans lequel :
la conception de base comprend une conception de base pour un centre de commande de moteur ;
la première variation de la conception de base comprend un premier composant qui est ajouté à la conception de base ; et
la deuxième variation de la conception de base comprend un deuxième composant qui est déplacé à l'intérieur de la conception de base.

3. Procédé selon la revendication 1 ou 2, dans lequel :
la conception de base comprend une conception de base pour un centre de commande de moteur ; et
la première variation de la conception de base comprend une tension de ligne différente utilisée pour alimenter le centre de commande de moteur.

4. Procédé selon la revendication 3, dans lequel la conception de base est associée à des fichiers de conception technique de base pour le centre de commande de moteur, le procédé comprenant en outre :
traiter les fichiers de conception technique pour le premier pack d'options qui ont été créés manuellement en utilisant une logique de détection de différence pour identifier une différence entre les fichiers de conception technique pour le premier pack d'options et les fichiers de conception technique de base ; et
stocker les données indiquant la différence entre les fichiers de conception technique du premier pack d'options et les fichiers de conception technique de base dans la bibliothèque de conception industrielle.

5. Procédé selon l'une des revendications 1 à 4, dans lequel la différence entre les fichiers de conception technique pour le premier pack d'options et les fichiers de conception technique de base comprend un deuxième composant électrique dans les fichiers de conception technique pour le premier pack d'options qui remplace un premier composant électrique dans les fichiers de conception technique de base selon la tension de ligne différente qui est utilisée pour alimenter le centre de commande de moteur.

6. Procédé selon la revendication 5, dans lequel le premier composant électrique a une première valeur nominale électrique, et le deuxième composant électrique a une deuxième valeur nominale électrique, la première valeur nominale électrique étant différente de la deuxième valeur nominale électrique.

7. Procédé selon la revendication 1, dans lequel les fichiers de conception technique pour le premier pack d'options comprennent au moins l'un des fichiers de câblage électrique, des fichiers de modélisation mécanique ou des fichiers de commande numérique par ordinateur ; ou
dans lequel la réception de la troisième commande pour le troisième produit de commande industrielle comprend la réception de la troisième commande pour le troisième produit de commande industrielle sur la base des données prévues par un utilisateur *via* une interface utilisateur.

8. Support de stockage non transitoire lisible par ordinateur ayant des instructions stockées sur celui-ci qui, lorsqu'elles sont exécutées par au moins un processeur, amènent ce dernier à mettre en œuvre des mises en œuvre comprenant :
recevoir (602) une première commande pour un premier produit de commande industrielle, le premier produit de commande industrielle associé à une conception de base et incluant un premier pack d'options qui est une première variation de la conception de base, dans lequel le produit de commande industrielle comprend un ou plusieurs des éléments suivants : un centre de commande de moteur (MCC), un entraînement à fréquence variable (VFD), et une interface homme-machine (HMI) ;
déterminer (604) que le premier pack d'options est nouveau en réponse à la détermination que les fichiers de conception technique pour le premier pack d'options n'existent pas dans une bibliothèque de conception industrielle ;
recevoir (606) les fichiers de conception technique pour le premier pack d'options qui ont été créés manuellement sur la base de la première variation de la conception de base ;
stocker (608) les fichiers de conception technique pour le premier pack d'options qui ont été créés manuellement sur la base de la première variation de la conception ou modèle de base dans la bibliothèque de conception industrielle ;
recevoir (610) une deuxième commande pour un deuxième produit de commande industrielle, le deuxième produit de commande industrielle associé à la conception de base et incluant un deuxième pack d'options qui est une deuxième variation de la conception de base ;
déterminer (612) que le deuxième pack d'options est nouveau en réponse à la détermination que les fichiers de conception technique pour le deuxième pack d'options n'existent pas dans la bibliothèque de conception industrielle ;
recevoir (614) les fichiers de conception technique pour le deuxième pack d'options qui ont été créés manuellement sur la base de la deuxième variation de la conception de base ;
stocker (616) les fichiers de conception technique pour le deuxième pack d'options qui ont été créés manuellement sur la base de la deuxième variation du dessin ou modèle de base dans la bibliothèque de conception industrielle ;
recevoir (618) une troisième commande pour un troisième produit de commande industrielle, le troisième produit de commande industrielle associé à la conception de base et incluant le premier pack d'options et le deuxième pack d'options ;
générer (620) automatiquement des fichiers de conception technique pour le troisième produit de commande industrielle en utilisant les fichiers de conception technique pour le premier pack d'options qui ont été créés manuellement sur la base de la première variation de la conception de base et les fichiers de conception technique pour le deuxième pack d'options qui ont été créés manuellement sur la base de la deuxième variation de la conception de base stockée dans la bibliothèque de conception industrielle, dans lequel les fichiers de conception technique incluent divers types de fichiers de conception assistée par ordinateur (CAO), y compris des schémas de conception de câblage électrique, des fichiers de modélisation mécanique tridimensionnelle comprenant la modélisation spatiale et/ou la modélisation thermique ; et
fournir (622) les fichiers de conception technique pour le troisième produit de commande industrielle à un système de fabrication de sorte que les fichiers de conception technique pour le troisième produit de commande industrielle puissent être utilisés pour fabriquer le troisième produit de commande industrielle.

9. Support lisible par ordinateur selon la revendication 8, dans lequel :
la conception de base comprend une conception de base pour un centre de commande de moteur ;
la première variation de la conception de base comprend un premier composant qui est ajouté à la conception de base ; et
la deuxième variation de la conception de base comprend un deuxième composant qui est supprimé de la conception de base ; ou
dans lequel :
le modèle de base comprend un modèle de base pour un centre de commande de moteur ; et
la première variation de la conception de base comprend une tension de commande différente utilisée par le centre de commande de moteur.

10. Support lisible par ordinateur selon la revendication 8, dans lequel les fichiers de conception technique pour le troisième produit de commande industrielle comprennent au moins l'un des fichiers de câblage électrique, des fichiers de modélisation mécanique ou des fichiers de commande numérique par ordinateur ; ou
dans lequel la réception de la troisième commande pour le troisième produit de commande industrielle comprend la réception de la troisième commande pour le troisième produit de commande industrielle sur la base des données prévues par un utilisateur *via* une interface utilisateur.

11. Support lisible par ordinateur selon la revendication 8, dans lequel la conception de base est associée à des fichiers de conception d'ingénierie de base, les opérations comprenant en outre :
traiter les fichiers de conception technique pour le premier pack d'options qui ont été créés manuellement en utilisant une logique de détection de différence pour identifier une différence entre les fichiers de conception technique pour le premier pack d'options et les fichiers de conception technique de base ; et
stocker les données indiquant la différence entre les fichiers de conception technique du premier pack d'options et les fichiers de conception technique de base dans la bibliothèque de conception industrielle.

12. Système comprenant :
un ou plusieurs processeurs ; et
un ou plusieurs supports de stockage lisibles par ordinateur non transitoires ayant des instructions stockées sur ceux-ci qui, lorsqu'elles sont exécutées par les un ou plusieurs processeurs, amènent les un ou plusieurs processeurs à mettre en œuvre les opérations comprenant :
recevoir (602) une première commande pour un premier produit de commande industrielle, le premier produit de commande industrielle associé à une conception de base et incluant un pack d'options qui est une variation de la conception de base, dans lequel le produit de commande industrielle comprend un ou plusieurs des éléments suivants : un centre de commande de moteur (MCC), un entraînement à fréquence variable (VFD), et une interface homme-machine (HMI) ;
déterminer (604) que le pack d'options est nouveau en réponse à la détermination que les fichiers de conception technique pour le pack d'options n'existent pas dans une bibliothèque de conception industrielle ;
recevoir (606) les fichiers de conception technique pour le pack d'options qui ont été créés manuellement sur la base de la variation de la conception de base ;
stocker (608) les fichiers de conception technique pour le pack d'options qui ont été créés manuellement sur la base de la variation de la conception de base dans la bibliothèque de conception industrielle ;
recevoir (618) une deuxième commande pour un deuxième produit de commande industrielle, le deuxième produit de commande industrielle associé à la conception de base et incluant le pack d'options qui est la variation de la conception de base ;
générer automatiquement (620) des fichiers de conception technique pour le deuxième produit de commande industrielle en utilisant les fichiers de conception technique pour le pack d'options qui ont été créés manuellement sur la base de la variation de la conception de base stockée dans la bibliothèque de conception industrielle, dans lequel les fichiers de conception technique incluent divers types de fichiers de conception assistée par ordinateur (CAO), y compris des schémas de conception de câblage électrique, des fichiers de modélisation mécanique tridimensionnelle comprenant la modélisation spatiale et/ou la modélisation thermique ; et
fournir (622) les fichiers de conception technique pour le deuxième produit de commande industrielle à un système de fabrication de sorte que les fichiers de conception technique pour le deuxième produit de commande industrielle puissent être utilisés pour fabriquer le deuxième produit de commande industrielle.

13. Système selon la revendication 12, dans lequel :
la conception de base comprend une conception de base pour un centre de commande de moteur ; et
la variation de la conception de base comprend une tension de ligne différente utilisée par le centre de commande de moteur ; ou
dans lequel :
la conception de base comprend une conception de base pour un système d'interface homme-machine ; et
la variation de la conception de base comprend un composant ajouté à la conception de base.

14. Système selon la revendication 12, dans lequel la conception de base est associée à des fichiers de conception technique de base, les opérations comprenant en outre :
traiter les fichiers de conception technique pour le pack d'options qui ont été créés manuellement par l'ingénieur en utilisant une logique de détection de différence pour identifier une différence entre les fichiers de conception technique pour le pack d'options et les fichiers de conception technique de base ; et
stocker les données indiquant la différence entre les fichiers de conception technique pour le pack d'options et les fichiers de conception technique de base dans la bibliothèque de conception industrielle ; ou
dans lequel la différence entre les fichiers de conception technique du pack d'options et les fichiers de conception technique de base comprend un composant qui est ajouté, supprimé ou déplacé.

15. Système selon la revendication 12, les opérations comprenant en outre :
soumettre les fichiers de conception technique pour le pack d'options qui ont été créés manuellement par l'ingénieur sur la base de la variation par rapport à la conception de base pour examen par la gouvernance ; et
recevoir une indication que les fichiers de conception technique pour le pack d'options qui ont été créés manuellement par l'ingénieur sur la base de la variation de la conception de base ont été approuvés sur la base de l'examen par la gouvernance ;
dans lequel le stockage des fichiers de conception technique pour le pack d'options qui ont été créés manuellement par l'ingénieur sur la base de la variation de la conception de base dans la bibliothèque de conception industrielle comprend le stockage des fichiers de conception technique pour le pack d'options qui ont été créés manuellement par l'ingénieur sur la base de la variation de la conception de base dans la bibliothèque de conception industrielle en réponse à la réception de l'indication que les fichiers de conception technique pour le pack d'options qui ont été créés manuellement par l'ingénieur sur la base de la variation de la conception de base ont été approuvés sur la base de la révision de la gouvernance.
